# EUROPEAN PATENT APPLICATION

(11) **EP 1 435 568 A2**
(43) Date of publication of application: **07.07.2004**
(21) Application number: 03022184.0
(22) Date of filing: 30.09.2003
(51) Int. Cl.: G06F 9/44

(54) **Common interface for ink trees**

(30) Priority: 31.10.2002 US 284418
(71) Applicant: MICROSOFT CORPORATION, Redmond, WA 98052 (US)
(72) Inventor: Szilagyi, Zoltan C., Redmond, WA 98052 (US); Rhoten, Mathew Paul, Seattle, WA 98105 (US); Tolmer, Justin Garrett, Seattle, WA 98144 (US); Quinton, Mary Michelle, Sammamish, WA 98074 (US)
(74) Representative: Grünecker, Kinkeldey, Stockmair & Schwanhäusser Anwaltssozietät

(57) **Abstract**

A system, method, and data structure are described that permit a function to be operable at a designated node or sub nodes. An instruction that designates one or more nodes is processed to perform the instruction on each of the nodes. If the instruction is not performable on a current node, the data structure relating to the current node is navigated to obtain one or more sub nodes. The instruction is then performed on the sub nodes.

## Description

### Technical Field

Aspects of the present invention are directed to a common functional interface for a data structure, such as a nodal data structure. More particularly, aspects of the present invention are directed to a common interface for addressing handwritten ink using tree data structure relationships.

### Background

Word processors store information in a linear arrangement. While text may be wrapped to fit a window, the data stream is commonly a linear file with various line, paragraph, section, and page breaks. As is known in the word processing art, one may select a word, sentence, or paragraph. One reason that operations are possible despite this varying scope is because punctuation marks and other formatting elements are well defined and understood by the word processor. Because these punctuation marks and formatting elements are embedded into the text document, one may easily perform operations on the selected text and/or regions because the beginning and end sections of a selection are easy to determine.

When the information displayed on a screen is handwritten electronic ink, however, the ability to differentiate between various ink elements and groups of elements becomes difficult. Performing an operation on a selection or a region of electronic ink may prove difficult. For example, if electronic ink spills over from one page on to the next, the selection of a paragraph (while easy in the textual, word processing environment) may prove difficult, as one may need to highlight the whole paragraph by attempting to select each word separately. Further, the operations performed on handwritten ink become difficult for programmers because they need to account for the various components of a selection. So, if a person selects a number of ink words then attempts to perform an operation on the selection, the functional code associated with the operation would need to be written so as to accommodate the various ink words (and/or the collection of selected ink words) in performing the operation. For example, underlining an ink word may have a different effect on the space immediately before and the space immediately after the ink word as opposed to underlining a group of words (where the interstitial spaces would be underlined as well). This requirement to produce extremely robust code becomes difficult for programmers, as they need to be able to anticipate all future scopes of selection.

Further, code migration between various platforms as products are modified can be problematic. New code needs to interact with the old code. One issue is the desire for older code to perform operations not originally designed into the older code, hence the need for the newer code. For ink-related information, a need exists to provide a way of addressing ink strokes in a more compact way than addressing each stroke independently.

### Summary

Aspects of the present invention provide solutions to at least one of the issues mentioned above, thereby enabling one to easily write code without complete knowledge of input scenarios. Aspects of the present invention provide the ability to call a function and indicate a nodal selection. Further, the function may operate on at least one sub node beneath the selected node.

These and other aspects of the present invention will become known through the following drawings and associated description.

### Brief Description of Drawings

The foregoing summary of some of the aspects of the invention, as well as the following detailed description of the various embodiments, is better understood when read in conjunction with the accompanying drawings, which are included by way of example, and not by way of limitation with regard to the claimed invention.

Figure 1 shows. a general description of a computer that may be used in conjunction with embodiments of the present invention.

Figures 2A and 2B show illustrative parsings of sentences in accordance with embodiments of the present invention.

Figure 3 shows a sample paragraph in accordance with embodiments of the present invention.

Figure 4 shows a representative tree structure applied to the paragraph of Figure 3 in accordance with embodiments of the present invention.

Figure 5 shows an ink object and structure information in accordance with embodiments of the present invention.

Figures 6A and 6B show examples of replicating functions to address multiple objects in accordance with embodiments of the present invention.

Figure 7 shows processing of a function using ink information and ink structure information regarding hand-written ink in accordance with embodiments of the present invention.

Figures 8A and 8B show illustrative tree structures in accordance with embodiments of the present invention.

Figure 9 shows a process for executing functions on multiple objects in accordance with embodiments of the present invention.

### Detailed Description

Aspects of the present invention relate to providing a consistent interface to handling ink operations, despite varying scope of inputs.

The following is arranged into a number of subsections to assist the reader in understanding the various aspects of the invention. The subsections include: terms; general purpose computer; ink trees; illustrative paragraph; executing functions; and data structures.

### Terms

Ink - A sequence or set of strokes with properties. A sequence of strokes may include strokes in an ordered form. The sequence may be ordered by the time captured or by where the strokes appear on a page. Other orders are possible. A set of strokes may include sequences of strokes or unordered strokes or any combination thereof. Ink may be expanded to include additional properties, methods, and trigger events and the like. When combined with at least some of these events, it may be referred to as an ink object.

Ink object - A data structure storing a ink with or without properties, methods, and/or events.

Stroke - A sequence or set of captured points. For example, when rendered, the sequence of points may be connected with lines. Alternatively, the stroke may be represented as a point and a vector in the direction of the next point. In short, a stroke is intended to encompass any representation of points or segments relating to ink, irrespective of the underlying representation of points and/or what connects the points.

Point - Information defining a location in space. For example, the points may be defined relative to a capturing space (for example, points on a digitizer), a virtual ink space (the coordinates in a space into which captured ink is placed), and/or display space (the points or pixels of a display device).

### General Purpose Computer

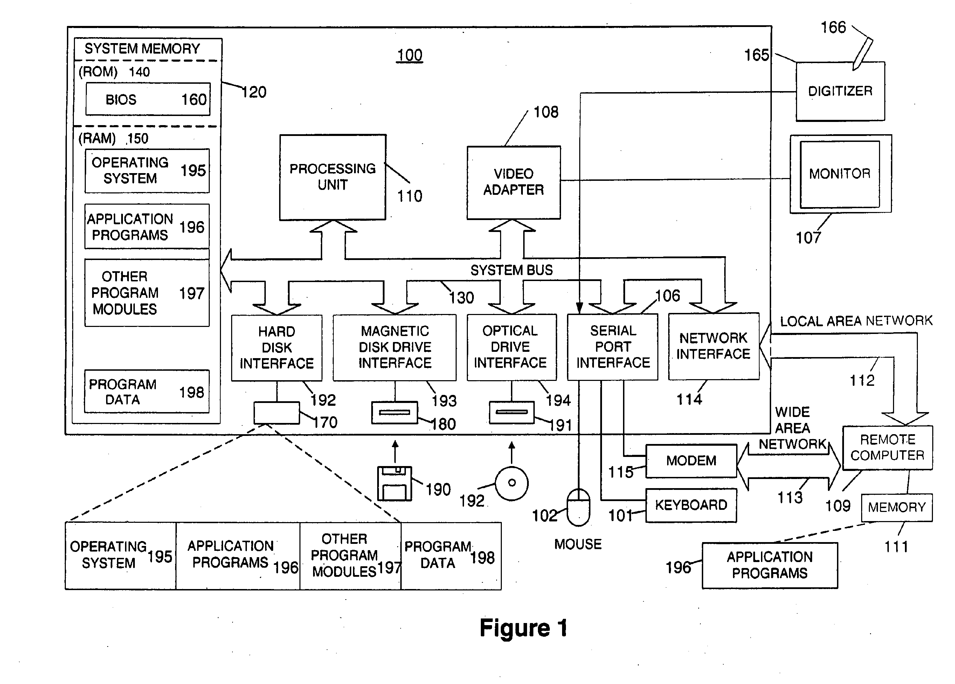

Figure 1 is a functional block diagram of an example of a conventional general-purpose digital computing environment that can be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the personal computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment.

A number of program modules can be stored on the hard disk drive 170, magnetic disk 190, optical disk 192, ROM 140 or RAM 150, including an operating system 195, one or more application programs 196, other program modules 197, and program data 198. A user can enter commands and information into the computer 100 through input devices such as a keyboard 101 and pointing device 102. Other input devices (not shown) may include a microphone, joystick, game pad, satellite dish, scanner or the like. These and other input devices are often connected to the processing unit 110 through a serial port interface 106 that is coupled to the system bus, but may be connected by other interfaces, such as a parallel port, game port or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor, personal computers typically include other peripheral output devices (not shown), such as speakers and printers. In a preferred embodiment, a pen digitizer 165 and accompanying pen or stylus 166 are provided in order to digitally capture freehand input. Although a direct connection between the pen digitizer 165 and the serial port is shown, in practice, the pen digitizer 165 may be coupled to the processing unit 110 directly, via a parallel port or other interface and the system bus 130 as known in the art. Furthermore, although the digitizer 165 is shown apart from the monitor 107, it is preferred that the usable input area of the digitizer 165 be co-extensive with the display area of the monitor 107. Further still, the digitizer 165 may be integrated in the monitor 107, or may exist as a separate device overlaying or otherwise appended to the monitor 107.

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet.

When used in a LAN networking environment, the computer 100 is connected to the local network 112 through a network interface or adapter 114. When used in a WAN networking environment, the personal computer 100 typically includes a modem 115 or other means for establishing a communications over the wide area network 113, such as the Internet. The modem 115, which may be internal or external, is connected to the system bus 130 via the serial port interface 106. In a networked environment, program modules depicted relative to the personal computer 100, or portions thereof, may be stored in the remote memory storage device.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

### Ink Trees

Computers arrange data into organized structures, so that the data can be easily located and accessed. One type of commonly used data structure is a nodal data structure of which a tree structure is but one example. In a tree structure, related pieces of data form individual nodes in the tree. Each node (except for the root node) will have only a single parent node, but may have a plurality of sibling nodes and a plurality of child nodes. Conventionally, a node A is referred to as a descendant of node B if node A's parent is node B, or if node A's parent is a descendant of node B. Similarly, node A is referred to as an ancestor of node B if node B is a descendant of node A.

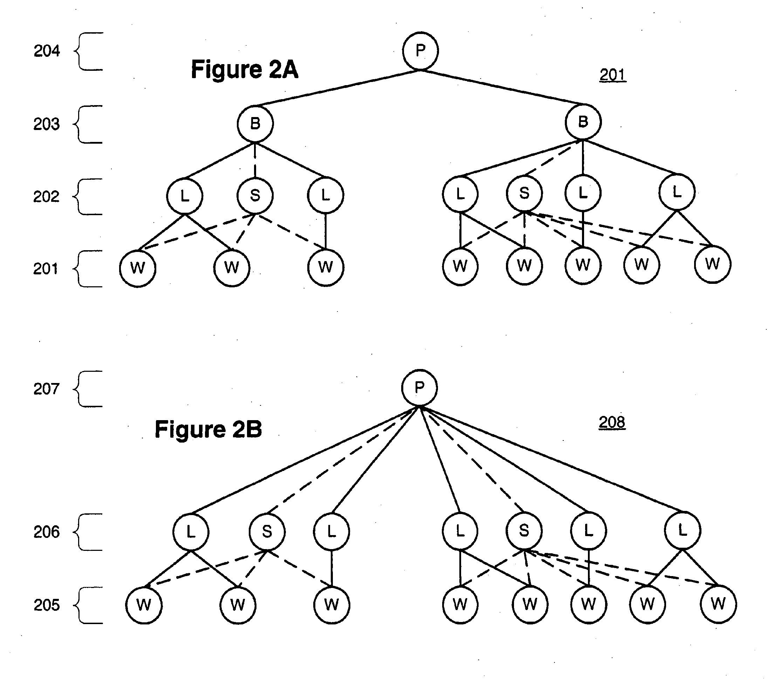

Figures 2A and 2B graphically illustrate how a tree structure can be used to organize information. More particularly, these figures illustrate how a tree structure can be used to organize data relating to electronic ink, so that the ink can be manipulated by a user or recognized by a recognition function of an application. Electronic ink may be made up of strokes, with each stroke corresponding to, for example, movement of a pointing device. Each stroke includes information defining the properties of the stroke, such as the data points making up the stroke, a directional vector of the stroke, a color of the stroke, and a thickness at which the stroke is to be rendered on a display.

One benefit of using a tree structure (or other graph) in relation to ink includes the ability to manipulate ink information directly (using strokes, words, blocks, and the like) or by addressing a node in a tree with the node and/or sub nodes being modified. This provides legacy support for different versions of code as original code addressing ink directly may still be used. Additionally, newer code may use the structure information to simplify the addressing process.

Another benefit of using trees is the ability to easily address whole sub-trees. For example, while setting a paragraph to a blue ink color may have no meaning for the paragraph itself (as a paragraph or block node in a tree may not have any identifier for an ink color), using an ink tree provides the ability to specify an ink color for a paragraph and have the color of the ink set for each stroke in the paragraph.

While strokes can be individually manipulated, it generally is more efficient to first organize strokes before manipulating them. Thus, a parser may be used to establish relationships between individual strokes, and then organize the strokes into larger units for editing or handwriting recognition. For example, a parser may be used to associate groups of related strokes together into units that form a word. Similarly, the parser may associate groups of one or more words together to form a line, and associate groups of one or more lines together to form a block or paragraph. The parser may then associate groups of one or more blocks or paragraphs together to form a single page or a document.

The parser may operate automatically (making relationships on its own), manually (a user specifying the relationships between ink), or a combination of both.

A parser typically will need to analyze electronic ink several times to produce a tree structure that accurately represents the relationships between the electronic ink strokes. Moreover, each time that the electronic ink is edited, the parser will need to update the tree. The parser may therefore need to operate frequently and for prolonged periods of time. To avoid having the parser constantly interfere with active software applications each time that it needs to refine the tree structure, the parser may instead continuously operate in the background with some environments.

Figure 2A illustrates a tree structure 200 representing the results that might typically be provided by a parser. The tree 200 includes word nodes 201. Each word node 201 contains the data for the individual strokes that make up a corresponding word W. More particularly, if the parser has determined that a group of strokes makes up a word W, then the data for those strokes are contained (or reference by) the word node 201 representing the word W.

If multiple words W are associated by the parser with a single line L, then the word nodes 201 for the words W are arranged as children of a line node 202 corresponding to the line L. The line nodes 202 may include data common to all of its children, such as the color or thickness of the ink making up the words W in the line L. Line nodes 202, corresponding to lines L that the parser has associated into a block B, are then arranged as children of a block node 203 corresponding to the block B. The block nodes 203 in turn serve as children of a page node 204, which, in the illustrated example, is the root node for the tree 200. Of course, if the parser recognized multiple page boundaries, then the page node 204 might itself be a child of a root node corresponding to the entire document.

Figure 2B shows an alternative ink structure in which ink information is parsed in terms of lines and paragraphs, as opposed to line, blocks, and pages.. The ink tree is shown as structure 208 with ink word nodes 205 connected to line nodes 206. The line nodes 206 are connected back to paragraph node 207.

Optional sentence structure information may be represented by sentence nodes S in Figure 2A and Figure 2B. This information may also be used in place of, or in conjunction with, line nodes 206. This sentence structure information provides the ability of the system to operate in terms of distinct sentences, as opposed to ink on lines. In some cases, a sentence may straddle multiple lines. In other cases, multiple sentences may occur in one line. The inclusion of the sentence information may violate the formal definition of a tree (each child has exactly one parent node). Here, inclusion of the sentence information provides two parents (the line nodes and the sentence nodes) for the various word nodes. This inclusion is more accurately represented by a directed acyclic graph (DAG). Accordingly, either trees or other structures may be used to accurately represent ink information.

Further, the additional information provided in the sentence nodes may improve the performance of functions calling a node or sub nodes.

### Illustrative Paragraph

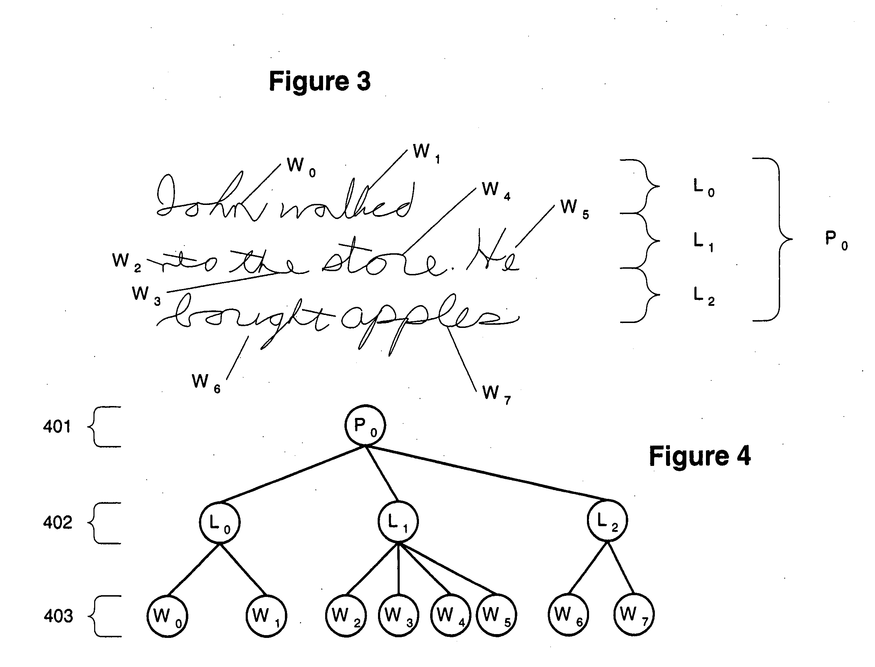

Figure 3 shows a paragraph to be parsed so as to provide ink structure information to the system. The paragraph includes two sentences. For illustrative purposes, the following two sentences are used.
"John walked to the store."
and
"He bought apples."

As shown in Figure 3, the pair of sentences are parsed to three lines L₀, L₁, and L₂. These lines are grouped into paragraph P₀. The words are separated as follows:

| Ink | Word Node Identifier |
|---|---|
| "John" | W₀ |
| "walked" | W₁ |
| "to" | W₂ |
| "the" | W₃ |
| "store." | W₄ |
| "He" | W₅ |
| "bought" | W₆ |
| "apples." | W₇. |

Figure 4 shows an example of an ink tree that includes the results of a parsing operation. Here, paragraph 401 P₀ has three children, namely, sub nodes 402 (L₀, L₁, and L₂) (representing the three lines of the paragraph). Node L₀ is the parent of two word nodes W₀ and W₁ (representing the two words in line L₀). Node L₁ is the parent of four word nodes W₂-W₅ (representing the four words in line L₁). Node L₂ is the parent of two word nodes W₆ and W₇ (representing the two words in line L₂) with the word nodes represented collectively as 403.

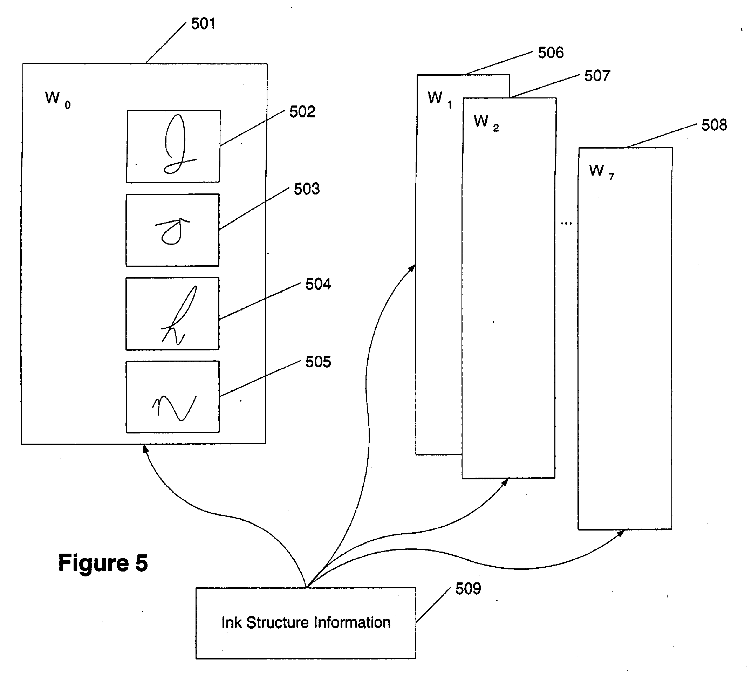

Figure 5 shows an example of how stroke information may be stored. Ink object 501 may include a single stroke (here, a single stroke that spells out the word "John"). Alternatively, the word "John" may include more than one stroke. Figure 5 shows an illustration where the ink object 501 includes four sets of strokes 502-505 that make up the word "John." Other strokes may be stored in the other ink objects 506-508. Finally, ink structure information 509 may be stored. The ink structure information provides the ability for the system to understand how the ink objects 501, 506-508 relate to each other. The ink structure may include paragraph, line, page, block, and other information describing the interrelationships in the ink.

Referring again to Figure 3, one may want to modify an attribute of a word (for example, "walked" word W₁). Using the click-to-select selection technique, one may select word W₁ by double-clicking it. Alternatively, depending on the implementation, one could use a single tap of a stylus to select a word or collection of strokes. Further implementations may even use additional taps to vary the selection scope.

Once selected, one may then perform an operation on the selected word. One would also expect that, to modify a group of words, one would select the words and attempt to perform the function on the selected group. The difficulty with this approach is the function that is to modify the word W₁ also needs to be smart enough to handle the modification of a group of words (or line or paragraph). Simply put, this approach requires the function to be able to handle multiple different types of inputs. The input to the function may be one stroke, multiple strokes, one word, multiple words, one line, multiple lines, one paragraph, or multiple paragraphs or other combinations of groups as well. This variety of different inputs to a function make writing the function difficult because the programmer needs to 1) anticipate all inputs that may be received and 2) write the function such that it performs consistently despite the number of disparate inputs.

### Executing Functions

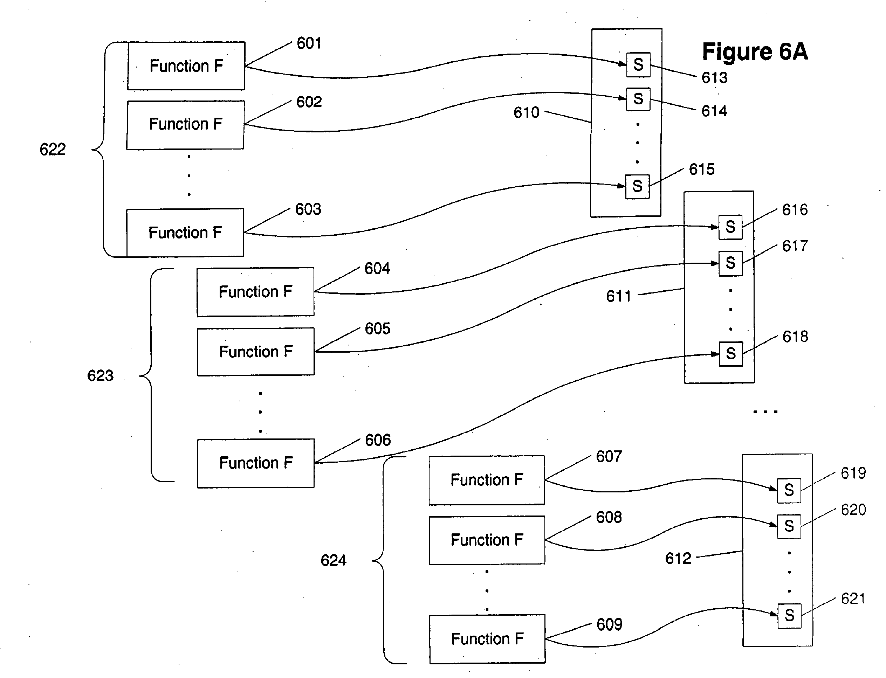

One approach to resolving this difficult issue for programmers is to prevent users from selecting an object to modify that is different than what the function can handle. For example, in Figure 6A, function F 601 is used to perform an operation on the strokes of ink objects (for instance, bolding, underlining, italicizing, inserting, deleting, enlarging, shrinking, and the like). Here, the user may be required to manually execute function F repeatedly to address each of the strokes in the various ink objects. The repeated operation of function F is shown as function blocks 601-609 operating on strokes 613-621. The group of functions 601-603 are represented as set 622 affecting ink object 610. Similarly, the group of functions 604-606 are represented as set 623 effecting ink object 611. Finally, the group of functions 607-609 are represented as set 624 effecting ink object 612.

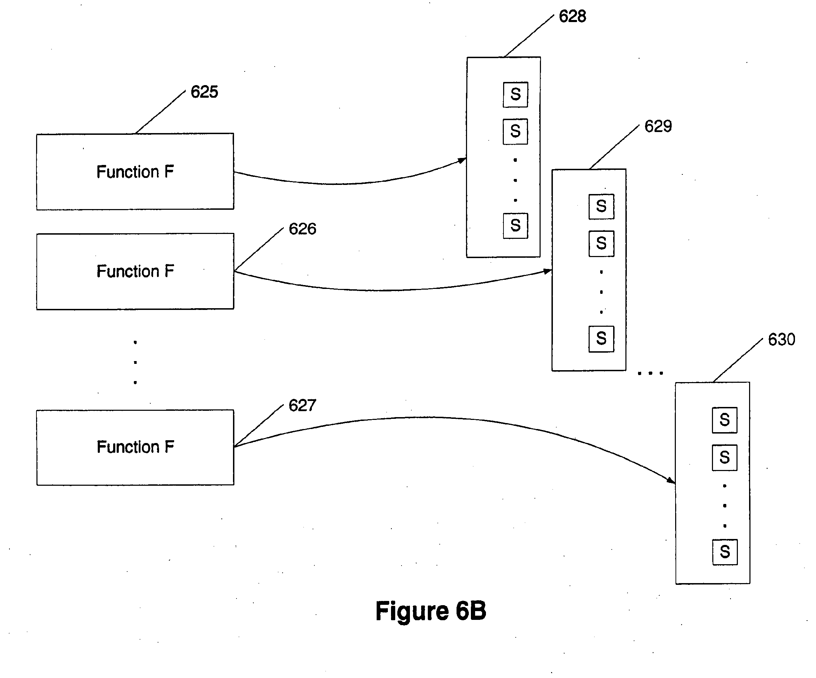

Figure 6B shows an alternative approach in which function F is written to work on an ink object. Functions F 625-627 operate on ink objects 628-630, respectively. While simplifying the task of executing the function F over the manual process of Figure 6A, there is no provision that Function F can handle inputs larger than a single ink object or smaller than a single ink object. This limited use of function F makes the developer's task more difficult as one then needs to write near duplicate functions F to accommodate the various inputs. Because of the divergent types of inputs, each function may need to be written in numerous times.

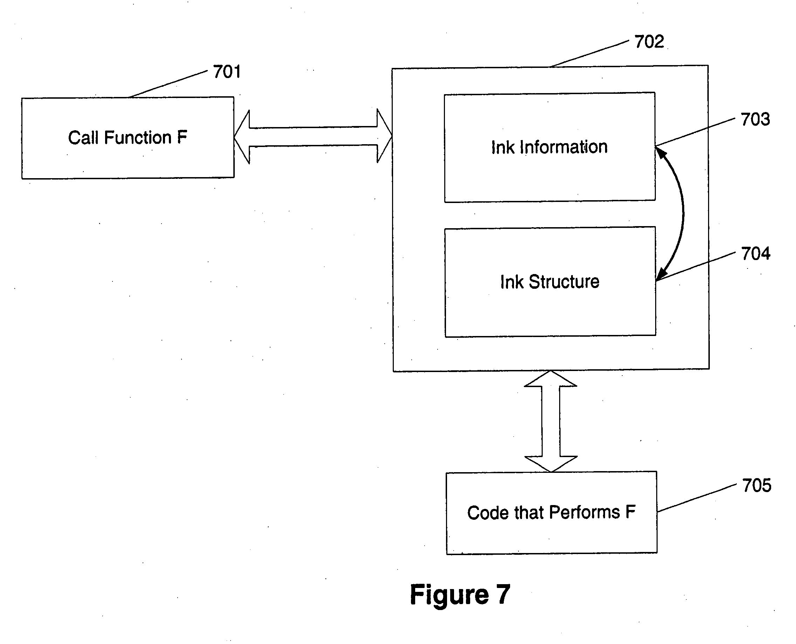

Figure 7 shows an alternative approach that uses the structure of the ink to provide an improved approach to performing functions on one or more ink objects or ink strokes. In Figure 7, every node exposes the same interface. The common interface may be embodied as passing various substructures to a calling function. For example, function F 701, with the identification of what it is supposed to modify, is passed to functional element 702. Functional element 702 includes ink information 703 as well as the ink structure information 704. From here, instructions may be passed to code 705 that performs function F. For example, if a user selects a paragraph, then the paragraph node relating to the user's selection may be passed to 702. In 702 the identification of the elements within the paragraph may be passed to the call that performs function F 705. If the function F relates to strokes and the call 701 only included selection of a paragraph, function block 702 would call to code that performs function F 705 and forward to it the strokes of the selected paragraph. Similarly, if a line or sentence was selected and the function F only related to words as combinations of strokes, functional block 702 would retrieve the identification of the words related to the selected lines or sentence from ink structure 704. The identification of the words would be passed to the code that performs function F 705.

### Data Structures

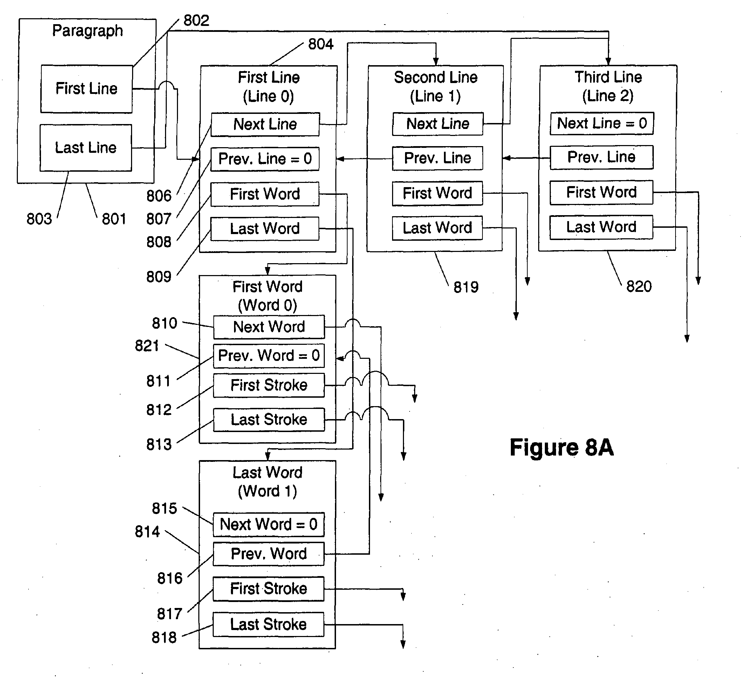

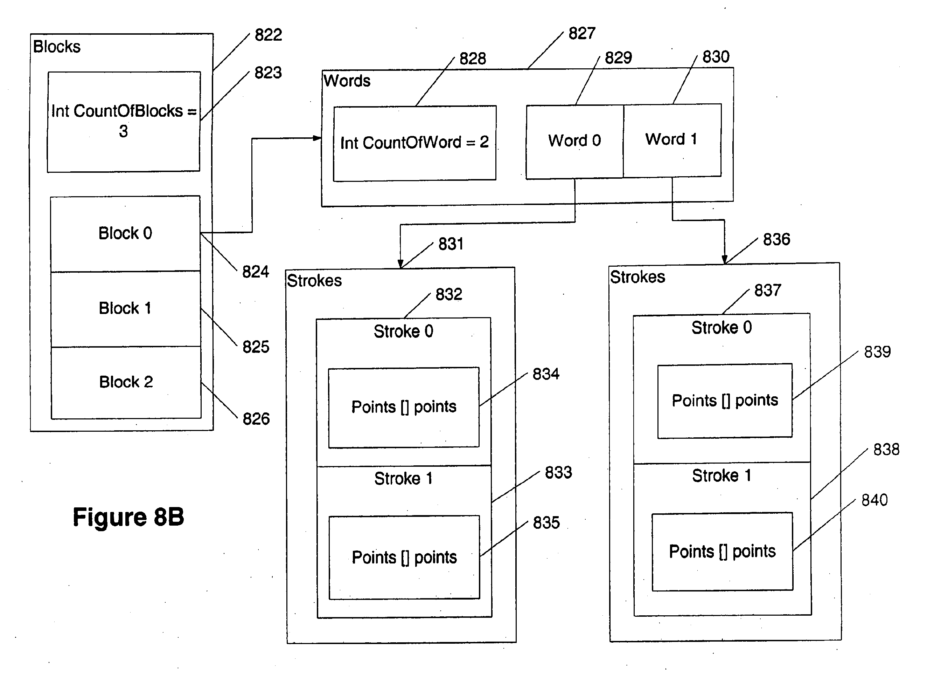

Figures 8A and 8B show illustrative data structures that may be used to support ink trees or other nodal data structures. Figure 8A shows doubly-linked tree structure. Figure 8B shows a similar tree using dynamic arrays.

The ink tree of Figure 4 is represented in part by Figure 8A. Paragraph node 801 includes two pointers. The first pointer points to the first line node 804. The second pointer 803 of paragraph node 801 points to the last line node 820. While not shown in Figure 8A, paragraph node 801 may also included a next paragraph pointer and a previous paragraph pointer. Of course, not all pointers need to be used or exist to accurately represent an ink tree.

The first line node 804 includes four pointers. The first pointer 806 points to the next line 819. The second pointer of first line node 804 points to the previous line node. In this example, as there is no previous node to first line node 804, the previous line node pointer 807 does not point to any previous node. Next, first word pointer 808 points to first word node 821. In this example, as there is only one other word under line node 804, the last word pointer 809 points to last word node 814, which is also the next word after W₀.

Second line node 819, similar to first line node 804, includes four pointers as well. The next line pointer of second line node 819 points to third line node 820. The previous line pointer of second 819 points back to first line node 804. First word pointer and last word pointer point to the respective first word and last word under second line node 819. The words associated with his line node 819 and 820 are not shown for the purpose of simplicity.

Third line node 820 includes four pointers as well. Next line node pointer of third line node 820 does not point to subsequent line node (as third line node is the last line in the example of Figure 4). The previous line pointer of third line node 820 points back to second line node 819. The first word pointer and the last word pointer of third line node 820 to point to the words associated with third line node 820.

First word node 821 includes four pointers. The first pointer is next word pointer 810, which points to the next word under line node 804. As there is no previous word under line node 804, previous word pointer 811 does not point to any word. The first stroke pointer 812 and last stroke pointer 813 point respectively to the first and last strokes.

Last word node 814 includes a similar structure to that of first word node 821. Last word node 814 includes a next word pointer 815 (that does not point to any more words), a previous word pointer 816 (that points back to the previous word node 821), a first stroke pointer 817 and a last stroke pointer 818.

The structure of the word nodes 810 and 814 may be embodied as depicted in Figure 8A or may have alternative representations. For example, the word nodes may be ink objects that contain ink strokes. Also, the word may be ink objects that point to strokes.

As an additional point, it is noted that Figure 8A represents nodes of Figure 4. Figure 8A shows the nodes with bidirectional references. In this example, all nodes include pointers to subsequent nodes as well as previous nodes. An advantage in having the number of pointers (or more linked list) is that, from any node, one can find the parent and surrounding nodes. Alternatively, this arrangement may be simplified by eliminating some of the pointers. For example, previous line pointers of line nodes 804, 819, and 820 may be eliminated. Similarly, previous word pointers 811 and 816 may be eliminated as well. Eliminating the previous line pointers and the previous word pointers provides the benefit of a smaller data structure.

It is appreciated that the variety of lines, words, and paragraphs may have multiple sub nodes. It is further appreciated that some nodes may not have subsequent nodes. For example, if a paragraph has three lines and the middle line has no content (e.g., if space has been inserted between two lines), any of the described nodes may be used as a placeholder with no sub nodes and/or content.

Further, it is appreciated that other names may be used to represent the various nodes and their relationships to one another, without departing from the scope of the invention. For example, paragraph node 801 may be referred to as a page node, and a number of nodes inserted between node 801 and the line nodes 804, 819, and 820 or word nodes 821 and 814. The additional inserted nodes may reflect other types of parsings of handwritten ink. These additional nodes may include sentence information (e.g., what words constitute a sentence, and the like).

As an alternative to Figure 8A, the tree structure of Figure 8B may be used. Figure 8B shows a tree structure using dynamic arrays. Dynamic arrays have the advantages of direct access to the members without having to traverse the list. Using dynamic arrays minimizes wasted memory consumed by traversing traditional, static arrays.

One dynamic array implementation may be based on the Microsoft Foundation Class' (MFC's) CArray class. Other implementations of dynamic arrays are known in the art.

Figure 8B shows blocks node 822 including an initial count of the number of blocks 823 contained within it (here, three). First block 0 824 is linked to a words node 827. Other blocks 1 825 and 2 826 may be linked to additional words nodes but are not shown for simplicity.

Words node 827 includes an initial count (828) of the number of words referenced by it (here, two words). Word 0 829 references strokes node 831. Word 1 references strokes node 836. Strokes node 831 includes one or more strokes (for example, stroke 0 832 and stroke 1 833). Each stroke includes one or more points that make up the ink strokes. The points are stored as collections 834 and 835 in the strokes 0 832 and 1 833, respectively.

Similarly, strokes node 836 includes one or more strokes (shown here with strokes 0 837 and stroke 1 838). Each stroke contains one or more points that make up the ink stroke or strokes (here, points 839 and points 840 are related to stroke 0 837 and stroke 1 838 respectively).

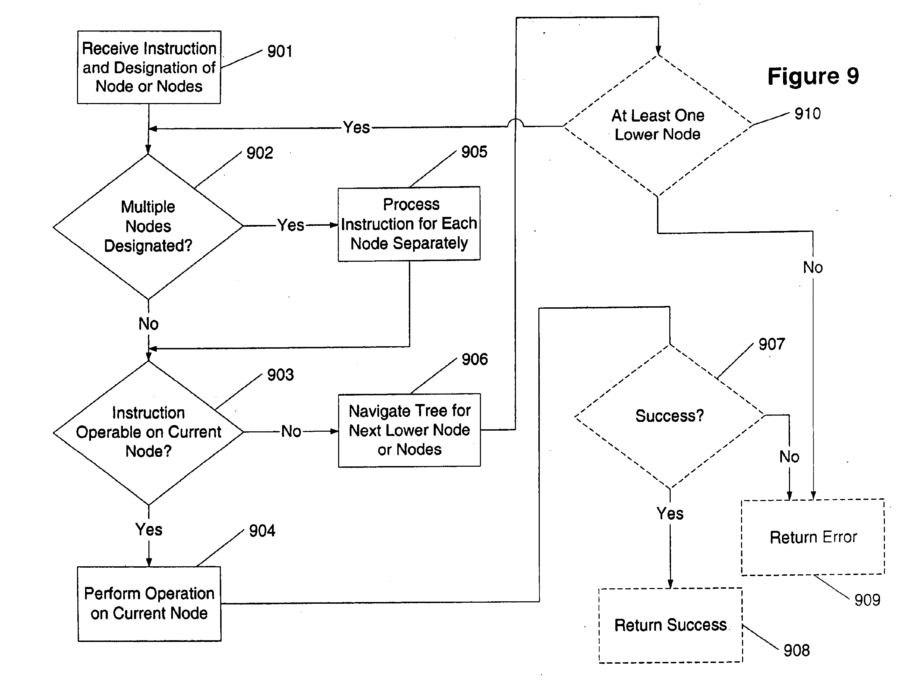

Figure 9 shows a process for navigating an ink tree and performing operations based on the nodes of the tree. The navigation technique is commonly referred to as a recursive tree descent technique. In step 901, the system receives an instruction and designation of a node or nodes to be processed with the instruction. In step 902, the system determines if nodes have been designated. If only a single node has been designated, the system then moves to step 903. If multiple nodes have been designated, then the system moves to step 905 and processes the instruction for each node separately. In other words, the process recursively descends the tree to operate on lower nodes if needed. The system then progresses to step 903.

In step 903, the system determines whether the instruction received in step 901 is operable on the current node. If the operation is operable on the current node, the system then performs the operation on the current node as shown in step 904. If the operation is not performable on the current node, the system then navigates the tree for the next lower node or nodes in step 906.

Optionally, the system may further actually determine if there is at least one lower node in step 910. If there is at least one lower node, then the system returns to step 902. Otherwise, the system returns an error in step 909.

As another optional step, after step 904, the system may determine in step 907 whether the operation performed in step 904 was successful. If successful, then the system returns the successful result in step 908. Otherwise it returns an error in step 909.

Although the invention has been defined using the appended claims, these claims are illustrative in that the invention is intended to include the elements and steps described herein in any combination or sub combination. Accordingly, there are any number of alternative combinations for defining the invention, which incorporate one or more elements from the specification, including the description, claims, and drawings, in various combinations or sub combinations. It will be apparent to those skilled in the relevant technology, in light of the present specification, that alternate combinations of aspects of the invention, either alone or in combination with one or more elements or steps defined herein, may be utilized as modifications or alterations of the invention or as part of the invention. It may be intended that the written description of the invention contained herein covers all such modifications and alterations.

## Claims

1. A process for performing an operation on a nodal data structure comprising the following steps:
receiving an instruction;
receiving a designation of at least one node in said data structure; and,
performing the instruction on the at least one node or nodes beneath the at least one node by navigating said data structure starting from said at least one node to find at least one sub node where said instruction may be properly performed.

2. The process according to claim 1, further comprising the step of:
when more than one node has been designated, processing said instruction independently for each designated node.

3. The process according to claim 1, wherein said nodal data structure is a tree data structure.

4. The process according to claim 1, wherein said nodal data structure is a tree data structure and includes ink information.

5. The process according to claim 1, further comprising the step of:
returning an error if there are no lower nodes.

6. The process according to claim 1, further comprising the step of:
performing said instruction on said at least one sub node.

7. The process according to claim 6, further comprising the steps of:
determining if said performance of said instruction was successful; and,
returning an indication of the success of said performance of said instruction, otherwise returning an indication of the failure of said performance of said instruction.

8. A computer readable medium having a data structure stored thereon, said data structure comprising:
at least one word node, said word node associated with stroke information;
at least one line node, said at least one line node having at least one pointer to said at least one word node; and
at least one paragraph node, said at least one paragraph node having at least one pointer to said at least one line node, wherein said data structure may be recursively navigated during the performance of a received instruction.

9. The computer readable medium according to claim 8, further comprising sentence structure information.

10. A computer readable medium having a data structure stored thereon, said data structure comprising:
at least one word node, said word node associated with stroke information;
at least one sentence node, said at least one sentence node having at least one pointer to said at least one word node; and
at least one paragraph node, said at least one paragraph node having at least one pointer to said at least one sentence node, wherein said data structure may be recursively navigated during the performance of a received instruction.

11. The computer readable medium according to claim 10, further comprising at least one line node.

12. A system for performing an operation on a data structure comprising:
an input for receiving an instruction and a designation of at least one node of said data structure;
a processor that determines if said instruction is performable at said at least one node and attempts to navigate to at least another node if said instruction is not performable at said at least one node.
